(19) Europäisches Patentamt / European Patent Office / Office européen des brevets

(11) **EP 3 466 724 B1**

(12) **EUROPEAN PATENT SPECIFICATION**

(45) Date of publication and mention
of the grant of the patent:
**21.10.2020 Bulletin 2020/43**

(21) Application number: **17802939.3**

(22) Date of filing: **26.05.2017**

(51) Int Cl.:
**B60C 11/03** *(2006.01)*        **B60C 9/18** *(2006.01)*
**B60C 9/20** *(2006.01)*

(86) International application number:
**PCT/JP2017/019798**

(87) International publication number:
**WO 2017/204353 (30.11.2017 Gazette 2017/48)**

(54) **HEAVY LOAD TIRE**

SCHWERLASTREIFEN

PNEUMATIQUE POUR LOURDES CHARGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2016 JP 2016106225**

(43) Date of publication of application:
**10.04.2019 Bulletin 2019/15**

(73) Proprietor: **Bridgestone Corporation
Tokyo 104-8340 (JP)**

(72) Inventor: **HASEGAWA Tomoo
Tokyo 104-8340 (JP)**

(74) Representative: **Oxley, Robin John George
Marks & Clerk LLP
15 Fetter Lane
London EC4A 1BW (GB)**

(56) References cited:
**EP-A1- 3 321 105        JP-A- H07 117 414
JP-A- S63 222 907        JP-A- 2012 183 885
JP-A- 2013 220 713        JP-A- 2017 019 365**

# Description

## Technical Field

The present invention relates to a heavy load tire provided with a tread portion.

## Related Art

A heavy load tire such as a construction vehicle tire is generally provided with a carcass ply, a belt layer, and a tread portion in order. In addition, the belt layer is usually composed of a plurality of belts, and Patent Literature 1 discloses a heavy load tire having: a protective belt layer composed of two protective belts, that is, a protective crossing belt layer; a main crossing belt layer composed of two main crossing belts; and a small crossing belt layer composed of two small crossing belts.

In such a tire, the main crossing belt layer is arranged on an outer side in a tire radial direction than the small crossing belt layer, and the protective belt layer is arranged on an outer side in the tire radial direction than the main crossing belt layer.

The angle formed by a tire circumferential direction and a cord constituting the small crossing belt layer is, for example, 4 to 10°, the angle formed by the tire circumferential direction and a cord constituting the main crossing belt layer is, for example, 18 to 35°, and the angle formed by the tire circumferential direction and a cord constituting the protective belt layer is, for example, 22 to 33°. Attention is also drawn to the disclosures of JP2012-183885A, JP63-222907A, JP7-117414A, JP2017-19365A and JP2013-220713A. In addition, attention is drawn to EP3321105A1 which forms part of the state of the art under Article 54(3) EPC.

## Citation List

## Patent Literature

Patent Literature 1: WO 2013/157544

## Summary of Invention

## Technical Problem

When arranging a high angle belt having a small angle such as 4 to 10° between a belt cord and the tire circumferential direction, growth of a tire part due to the internal pressure or running, that is, increase in the tire diameter is suppressed.

As a result, increase in the tire diameter due to the internal pressure or running occurs at an outer part in a tire widthwise direction of the high angle belt, especially at a 1/4 point which is a position spaced from the tire equator line by 1/4 of the width in the tire widthwise direction of the tread portion. In addition, forces in opposite directions with respect to the tire rotational direction are generated at a tire part where the tire diameter is increased and at a tire part where the tire diameter is hardly increased, and a difference in the degree of deformation between both the tire parts generates shearing force, which is likely to cause uneven wear.

It is to be noted that such a phenomenon is not limited to a case where a high angle belt is arranged in the belt layer but also occurs in a case where the rolling radius is comparatively different in the same tire.

In addition, these are remarkable especially in large construction vehicle tires among heavy load tires.

The present invention has been made in view of the above-described problems, and it is an object of the present invention to provide a heavy load tire capable of improving uneven wear resistance property by suppressing shearing force to be generated between a tread rubber part where driving force is generated and a tread rubber part adjacent to the above-described tread rubber part where braking force is generated.

## Solution to Problem

A heavy load tire according to the present invention is provided as claimed in claim 1.

[DELETED]

## Advantageous Effects of Invention

A heavy load tire according to the aspects of the present invention improves uneven wear resistance property by suppressing shearing force to be generated between a tread rubber part where driving force is generated and a tread rubber part adjacent to the above-described tread rubber part where braking force is generated.

## Brief Description of Drawings

Fig. 1 is a sectional view of a construction vehicle tire according to the first embodiment in a tire widthwise direction along a tire radial direction.
Fig. 2 is an explanatory drawing for explaining the belt structure of the construction vehicle tire according to the first embodiment.
Fig. 3 is a plan view for explaining a tread pattern in the construction vehicle tire according to the first embodiment.
Fig. 4 is a sectional view of a first inner widthwise groove formed at a tread portion of the construction vehicle tire according to the first embodiment.
Fig. 5 is a plan view for explaining a tread pattern in a construction vehicle tire according to the second embodiment.

Description of Embodiments

The following description will explain some embodiments of the present invention with reference to the attached drawings using a construction vehicle tire as an example of a heavy load tire. In the following description, the same or similar parts are denoted by the same or similar reference numerals, and detailed description thereof is appropriately omitted. Moreover, the following embodiments are illustrations for embodying the technical idea of the present invention, and embodiments of the present invention can be implemented with various modifications without departing from the gist.

(First Embodiment)

First, the first embodiment will be described.

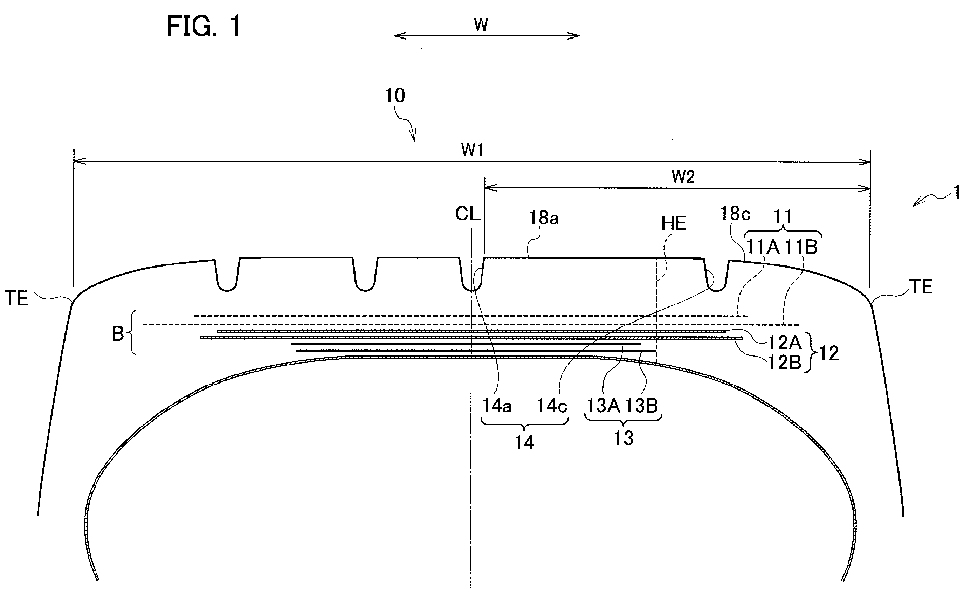

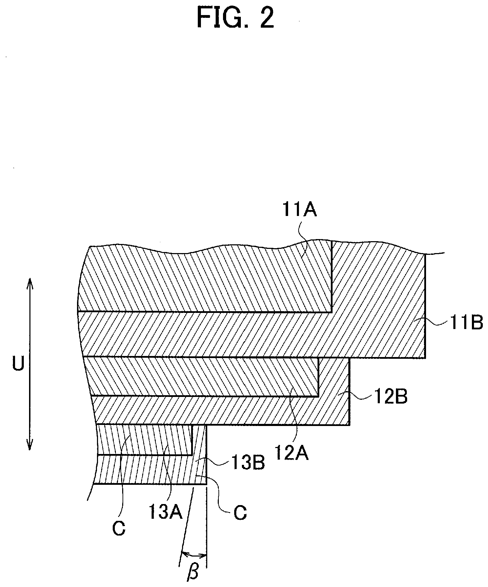

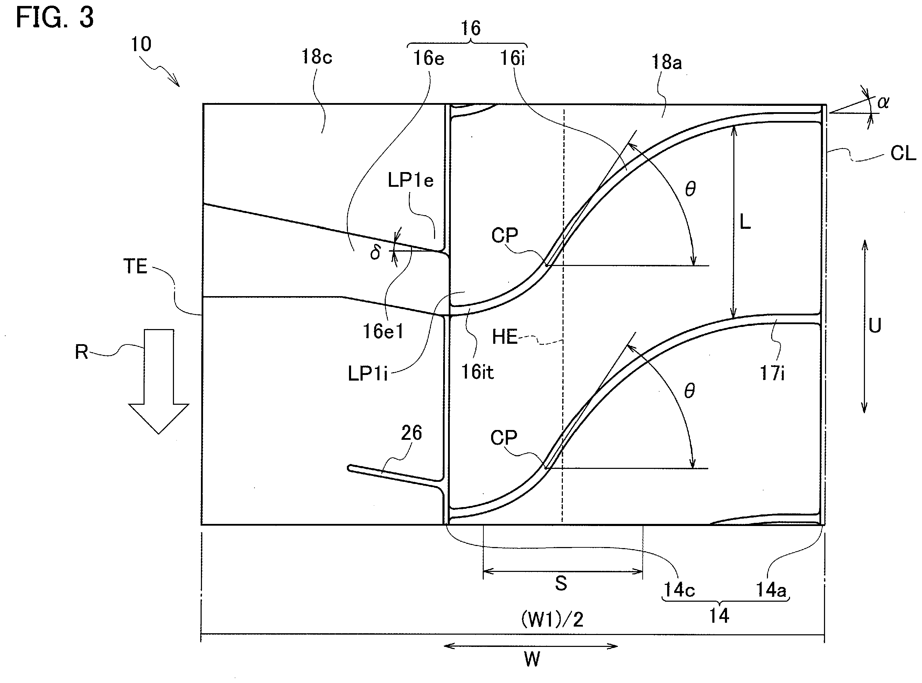

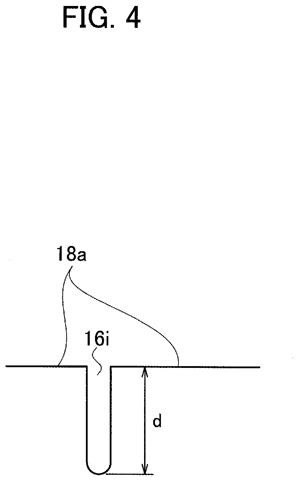

Fig. 1 is a sectional view of a construction vehicle tire of the first embodiment in a tire widthwise direction along a tire radial direction. Fig. 2 is an explanatory drawing for explaining the belt structure of the construction vehicle tire of the first embodiment. Fig. 3 is a plan view for explaining a tread pattern in the construction vehicle tire of the first embodiment. In Fig. 3, it is to be noted that separation of the upper side and the lower side of the paper plane is drawn not with break lines but with straight lines for the sake of drawing. Fig. 4 is a sectional view of a first inner widthwise groove formed at a tread portion of the construction vehicle tire of the first embodiment.

As illustrated in Fig. 1, a construction vehicle tire 1 according to the first embodiment is provided with a plurality of belt layers. Specifically, as illustrated in Figs. 1 and 2, the construction vehicle tire 1 according to the first embodiment is provided with a protective belt layer 11 composed of two protective belts 11A/11B, a main crossing belt layer 12 composed of two main crossing belts 12A/12B, and a small crossing belt layer 13 composed of two small crossing belts 13A/13B in a tread portion 10.

In such a construction vehicle tire 1, the main crossing belt layer 12 is arranged on an outer side in the tire radial direction than the small crossing belt layer 13, and the protective belt layer 11 is arranged on an outer side in the tire radial direction than the main crossing belt layer 12 as illustrated in Figs. 1 and 2.

In the first embodiment, the angle $\beta$ (see Fig. 2) formed by a tire circumferential direction U and a cord C constituting the small crossing belt layer 13 is within the range of 4 to 10°. Accordingly, the small crossing belt layer 13 is constituted of a high angle belt having an angle equal to or smaller than 10° between the tire circumferential direction and a cord constituting the belt layer. The angle formed by a cord constituting the main crossing belt layer 12 and the tire circumferential direction U is within the range of 18 to 35°. The angle formed by a cord constituting the protective belt layer 11 and the tire circumferential direction U is within the range of 22 to 33°.

Moreover, as illustrated in Fig. 3, the construction vehicle tire 1 according to the first embodiment is provided with a plurality of block rows defined by a circumferential groove 14 extending in the tire circumferential direction U or a tread end TE (definition of the tread end will be described later), which is an end portion in a tire widthwise direction W of the tread portion 10, and a widthwise groove 16, which extends in the tire widthwise direction W, in the tread portion 10. Here, the circumferential groove 14 extends along the tire circumferential direction and is composed of a circumferential groove 14a located on a tire equator line CL, a circumferential groove 14b located between a center land portion 18a and a second land portion 18b, and a circumferential groove 14c located between the second land portion 18b and a shoulder land portion 18c.

Moreover, the construction vehicle tire 1 according to the first embodiment is constructed in a manner such that a length W2 of the widthwise groove 16 in the tire widthwise direction W becomes equal to or larger than 30% of a tread width W1 (see the definition of the tread width described later), which is the length of the tread portion 10 in the tire widthwise direction W, as illustrated in Fig. 1.

Moreover, in the first embodiment, the widthwise groove 16 is composed of: a first inner widthwise groove 16i, which opens to the circumferential groove 14a, extends outward in the tire widthwise direction, traverses the center land portion 18a, and opens to the circumferential groove 14c; and a first outer widthwise groove 16e, which opens to the circumferential groove 14c, traverses the shoulder land portion 18c, and traverses the tread end TE. The groove width of the first outer widthwise groove 16e is larger than that of the first inner widthwise groove 16i.

Moreover, the first inner widthwise groove 16i extends in a curved shape and does not have any corner portion.

Moreover, the first inner widthwise groove 16i is inclined with respect to the tire widthwise direction W so that an outer position in the tire widthwise direction of an area from the tire equator line CL to a high angle belt end HE (which is an end of a belt of the small crossing belt layer 13, that is, an end of a high angle belt in the first embodiment) is grounded earlier during tire normal rotation.

Moreover, the first inner widthwise groove 16i has an inflection point CP where the direction of a convex or a concave with respect to the tire circumferential direction U changes on at least one side of the tire equator line CL.

An area from the inflection point CP to the tire equator line CL in the first inner widthwise groove 16i extends with an angle against the tire widthwise direction W becoming smaller toward the tire equator line and opens to the circumferential groove 14a. An area from the inflection point CP to the circumferential groove 14c in the first inner widthwise groove 16i has a curved convex shape toward a tire normal rotation direction R side, and the first inner widthwise groove 16i extends from the inflection point CP toward the tire normal rotation direction R side and outward in the tire widthwise direction with an inclination angle against the tire circumferential direction U gradually increasing to 90° and is connected with an end portion of the first outer widthwise groove 16e on the side of the circumferential groove 14c.

In addition, the first inner widthwise groove 16i and the first outer widthwise groove 16e are connected with each other so that groove wall positions on the tire normal rotation direction R side are aligned. Accordingly, the first inner widthwise groove 16i has a bent groove portion 16it forming an inner land part LP1i, which has a curved convex shape toward the tire normal rotation direction R side, in the center land portion 18a.

In the first embodiment, the angle δ formed by the tire widthwise direction W and a groove wall 16e1 on a side opposite to the tire normal rotation direction is within the range of 0° < δ ≤ 30° at the opening position of the first outer widthwise groove 16e and the circumferential groove 14c. With such a structure, the first outer widthwise groove 16e forms an outer land part LP1e, which has a convex shape toward the tire normal rotation direction R side, in the shoulder land portion 18c. Here, the angle formed by the tire widthwise direction W and the groove wall 16e1 of the outer land part LPle becomes the above-mentioned δ, and falls within the range of 0° < δ ≤ 30°.

It is to be noted that a groove wall forming the first outer widthwise groove 16e on the tire normal rotation direction R side, that is, a groove wall opposed to the groove wall 16e1 extends outward in the tire widthwise direction while being inclined toward a side opposite to the tire normal rotation direction R and extends along the tire widthwise direction W in the middle, so that the first outer widthwise groove 16e extends with the groove width becoming larger toward the outer side in the tire widthwise direction from the middle and opens to the tread end TE.

Moreover, in the shoulder land portion 18c, a second outer widthwise groove 26 is formed at a position spaced from the first outer widthwise groove 16e at a predetermined interval in the tire circumferential direction U. The groove width of the second outer widthwise groove 26 is smaller than that of the first outer widthwise groove 16e.

The second outer widthwise groove 26 opens to the circumferential groove 14c, linearly extends toward a side opposite to the tire normal rotation direction R side and outward in the tire widthwise direction, and further terminates in the shoulder land portion 18c.

Moreover, between first inner widthwise grooves 16i adjacent to each other in the tire circumferential direction U, a second inner widthwise groove 17i, which has the same shape as the first inner widthwise groove 16i, opens to the circumferential groove 14c, and reaches the tire equator line CL, is arranged.

The opening position of the second outer widthwise groove 26 to the circumferential groove 14c is a position shifted toward opposite side of the tire normal rotation direction R from the opening position of the second inner widthwise groove 17i to the circumferential groove 14c.

Moreover, in a belt layer B arranged on an inner side in the tire radial direction than the tread portion 10, the small crossing belt layer 13 composed of the two small crossing belts 13A/13B as described above is arranged as a high angle belt.

In addition, in tread surface view, that is, in plan view of the tread portion 10, a inflection point CP is arranged in a tire widthwise area S within 1/8, or more preferably a tire widthwise area within 1/16, of the tread width W1 from the high angle belt end HE as the widthwise center.

Here, the tread width is the "tread width" defined by JATMA YEAR BOOK. Moreover, the above-described tread end means the outermost position in the tire widthwise direction of the tire tread surface, which is a surface where the tire surface comes into contact with the ground in a state where the tire is assembled to a normal rim and filled to have normal internal pressure, and a normal load is applied. It is to be noted that "normal rim" means a standard rim specified in the following standard according to the size of the tire, "normal internal pressure" means a pneumatic pressure corresponding to the maximum load capacity of a single wheel in an applicable size described in the following standard, and "normal load" means the maximum load of a single wheel in an applicable size of the following standard, that is, the maximum load capacity. In addition, the standard is an industrial standard effective in an area where the tire is produced or used, for example "JATMA YEAR BOOK" from "Japan Automobile Tyre Manufacturers Association" in Japan, "YEAR BOOK" from "THE TIRE AND RIM ASSOCIATION INC." in the United States, or "STANDARD MANUAL" from "The European Tyre and Rim Technical Organisation" in Europe.

In addition, in the first embodiment, the maximum value of the angle θ formed by the tire widthwise direction W and the first inner widthwise groove 16i is set within the range of 20 to 80°. It is to be noted that Fig. 3 illustrates a state where the angle θ becomes largest at the inflection point CP.

Furthermore, in the first embodiment, the angle α formed by the first inner widthwise groove 16i and the tire widthwise direction W is within the range of 0 to 20° at the intersection position of the tire equator line CL and the first inner widthwise groove 16i. It is to be noted that Fig. 3 illustrates the first inner widthwise groove 16i in a manner such that α becomes approximately 0°.

Moreover, the distance L (see Fig. 3) between the first inner widthwise groove 16i and the second inner widthwise groove 17i adjacent to each other in the tire circumferential direction U, and the groove depth d (see Fig. 4) of the first inner widthwise groove 16i along the tire radial direction in the first embodiment satisfy the following relational expression.

$$d/L > 1/10$$

When focusing on wear resistance property, it is to be noted that the width of the circumferential groove 14 in the tire widthwise direction W is preferably equal to or smaller than 10 mm with which the land portions support each other when force is applied.

On the other hand, when focusing on heat dissipation property, the width of the circumferential groove 14 in the tire widthwise direction W is preferably larger than 10 mm.

Furthermore, the construction vehicle tire 1 according to the first embodiment may be constructed in a manner such that the circumferential pitch of the first inner widthwise grooves 16i becomes equal to or larger than 50 mm.

(Function, Effect)

The following description will explain the functions and effects of the first embodiment.

In the construction vehicle tire 1 of the first embodiment, the first inner widthwise groove 16i configuring the widthwise groove 16 opens to the circumferential groove 14a and has an inflection point CP where the direction of a convex or concave with respect to the tire circumferential direction U changes toward the outer side in the tire widthwise direction.

In addition, an inner side of the first inner widthwise groove 16i in the tire widthwise direction than the inflection point CP extends with the angle θ against the tire widthwise direction W becoming smaller toward the tire equator line and reaches the tire equator line.

In addition, an outer side of the first inner widthwise groove 16i in the tire widthwise direction than the inflection point CP extends from the inflection point CP toward the tire normal rotation direction R side and outward in the tire widthwise direction, so that an inner land part LP1i having a curved convex shape toward the tire normal rotation direction R side is formed. In addition, in tread surface view, the inflection point CP is arranged in a tire widthwise area within 1/8 of the tread width W1 from the high angle belt end HE as the widthwise center.

In addition, the first outer widthwise groove 16e configuring the widthwise groove 16 extends toward a side opposite to the tire normal rotation direction R side and outward in the tire widthwise direction, so that an outer land part LP1e having a convex shape toward the tire normal rotation direction R side is formed in the shoulder land portion 18c.

Therefore, when the tire is rotated, the tire rubber is caused to flow in the tire normal rotation direction R by incompressibility of the tire rubber, and circumferential driving force is generated in the vicinity of the apex portion of the pattern, that is, in the vicinity of the apex portion of the outer land part LP1e or the inner land part LP1i having a curved convex shape toward the tire normal rotation direction R side and acts as force to cancel the braking force generated due to the tire structure. Furthermore, since the widthwise groove 16 has a curved shape reaching from the inflection point CP to the equator line CL, uniform wear resistance performance in the tire widthwise direction can be obtained on an outer side in the tire widthwise direction than the inflection point CP in comparison with a case where the widthwise groove 16 on an inner side in the tire widthwise direction than the inflection point CP has a groove shape inclined at a certain angle. Accordingly, uneven wear caused by the shearing force due to the driving force and the braking force is suppressed, and therefore the construction vehicle tire 1 with improved uneven wear resistance property can be obtained.

It is to be noted that Fig. 3 illustrates an example in which the position in the tire widthwise direction of the inflection point CP is arranged on a slightly outer side in the tire widthwise direction than the high angle belt end HE, and a remarkable effect in suppressing uneven wear at the 1/4 point is achieved.

Moreover, by forming the widthwise groove 16 to have a curved shape as in the first embodiment, it becomes possible to incline only a site, which is desired to be inclined, of the widthwise groove 16 with respect to the tire circumferential direction U, and it becomes easy to ensure the rigidity in the tire widthwise direction. Moreover, since the inclination of the widthwise groove 16 can be made large in comparison with a case where the widthwise groove 16 has a corner portion, the above-described circumferential driving force can be made large effectively.

Moreover, since an area on an inner side in the tire widthwise direction than the inflection point CP extends with the angle θ against the tire widthwise direction W becoming smaller toward the tire equator line and reaches the tire equator line as described above, the first inner widthwise groove 16i is inclined with respect to the tire widthwise direction so that an outer position in the tire widthwise direction of an area from the tire equator line CL to the high angle belt end HE is grounded earlier during rotation in the tire normal rotation direction R. Therefore, the above-described circumferential driving force can be made large further effectively.

Moreover, the maximum value of the angle θ formed by the tire widthwise direction W and the first inner widthwise groove 16i is within the range of 20 to 80°. Therefore, the above-described circumferential driving force can be made large effectively.

Moreover, the angle α formed by the first inner widthwise groove 16i and the tire widthwise direction W is within the range of 0 to 20° at an intersection position of the tire equator line CL and the first inner widthwise groove 16i. This effectively prevents the block rigidity from being impaired.

Moreover, in the first embodiment, the groove wall 16e1 forming the first outer widthwise groove 16e on a side opposite to the tire normal rotation direction R side extends outward in the tire widthwise direction while being inclined toward the opposite direction of the tire normal rotation direction R side. In addition, the angle $\delta$ formed by the groove wall 16e1 and the tire widthwise direction W, that is, the angle $\delta$ formed by the outer land part LPle and the tire widthwise direction is within the range of $0° < \delta \leq 30°$ at the opening position of the first outer widthwise groove 16e and the circumferential groove 14c. It is therefore possible to further improve the uneven wear resistance property while effectively preventing the block rigidity of the outer land part LP1e from being impaired.

Although the first embodiment explains a case where the inflection point CP is arranged in a tire widthwise area within 1/8 of the tread width W1 in tread surface view from the high angle belt end HE as the widthwise center as an example in which the inflection point CP is arranged within a predetermined area in the tire widthwise direction, it is to be noted that the uneven wear resistance property at the tread rubber part can be improved according to a similar principle even when the connection portion FP is arranged in a tire widthwise area S within 1/8, or more preferably 1/16, of the tread width W1 not from the high angle belt end HE but from a position in the tire widthwise direction where the rolling radius is large during tire normal rotation as the widthwise center. Furthermore, a similar effect can be achieved even in a construction vehicle tire that does not have a high angle belt.

(Second Embodiment)

Next, the second embodiment will be described. The second embodiment is not according to the present invention, but is useful for understanding the present invention. The second embodiment is different from the first embodiment in that a tire normal rotation direction R is in the opposite direction. Therefore, in the second embodiment, parts similar to those of the first embodiment are denoted by the same reference numerals, the detailed explanation thereof is omitted, and operations, effects and the like to be obtained by making the tire normal rotation direction R opposite to that of the first embodiment will be described in detail.

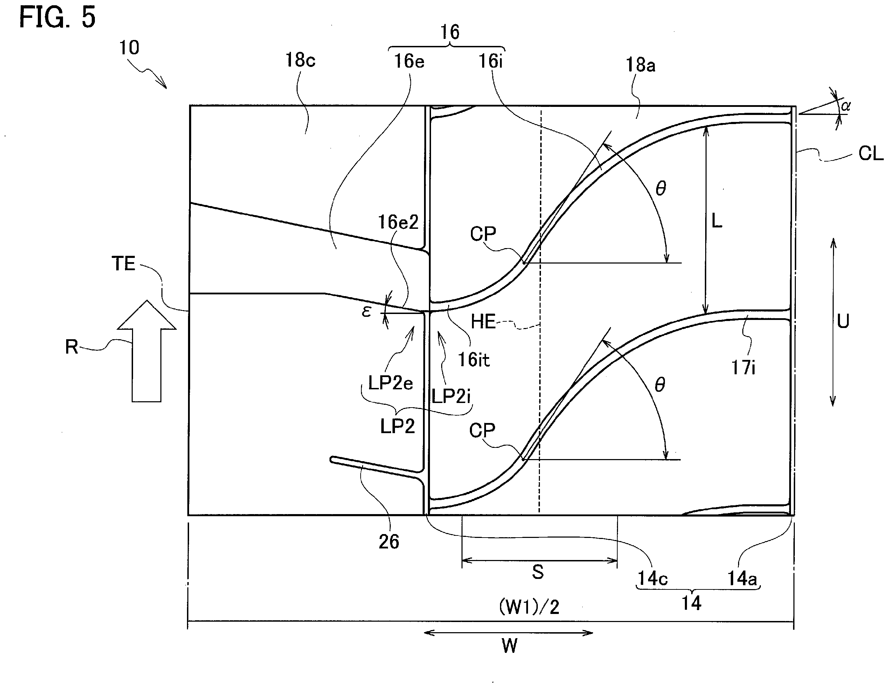

Fig. 5 is a plan view for explaining a tread pattern in a construction vehicle tire of the second embodiment. In the second embodiment, an area from an inflection point CP to a tire equator line CL in a first inner widthwise groove 16i extends with an angle against a tire widthwise direction W becoming smaller toward the tire equator line and opens to a circumferential groove 14a. An area from the inflection point CP to a circumferential groove 14c in the first inner widthwise groove 16i has a curved convex shape toward a tire normal rotation direction R side, and the first inner widthwise groove 16i extends from the inflection point CP toward a side opposite to the tire normal rotation direction R and outward in the tire widthwise direction with an inclination angle against a tire circumferential direction U gradually increasing to 90° and is connected with an end portion of a first outer widthwise groove 16e on the side of the circumferential groove 14c.

In addition, the first inner widthwise groove 16i and the first outer widthwise groove 16e are connected with each other so that groove wall positions on a side opposite to the tire normal rotation direction R side, that is, the positions in the tire circumferential direction of groove walls opposed to the groove walls on the tire normal rotation direction R side are aligned. Accordingly, the first inner widthwise groove 16i has a bent groove portion 16it forming the inner land part LP2i, which has a curved concave shape with respect to the tire normal rotation direction R.

A groove wall 16e2 forming the first outer widthwise groove 16e on a side opposite to the tire normal rotation direction R side, that is, a groove wall opposed to the groove wall on the tire normal rotation direction R side extends outward in the tire widthwise direction while being inclined toward the tire normal rotation direction R side. In the second embodiment, the angle $\varepsilon$ formed by the groove wall 16e2 and the tire widthwise direction W is within the range of $0° < \varepsilon \leq 30°$ at the opening position of the first outer widthwise groove 16e and the circumferential groove 14c. As described above, the first outer widthwise groove 16e configuring a widthwise groove 16 extends toward the tire normal rotation direction R side and outward in the tire widthwise direction, so that an outer land part LP2e, which forms a land portion having a concave shape with respect to the tire normal rotation direction R together with an adjacent center land portion 18a on an inner side in the tire widthwise direction, is formed.

Moreover, in the second embodiment, the groove wall 16e2 on a side opposite to the tire normal rotation direction R side extends along the tire widthwise direction W in the middle, so that the first outer widthwise groove 16e extends with the groove width becoming larger toward the outer side in the tire widthwise direction from the middle and opens to a tread end TE.

Moreover, in a shoulder land portion 18c, a second outer widthwise groove 26 is formed at a position spaced from the first outer widthwise groove 16e at a predetermined interval in the tire circumferential direction U. The groove width of the second outer widthwise groove 26 is smaller than that of the first outer widthwise groove 16e.

The second outer widthwise groove 26 opens to the circumferential groove 14c, linearly extends toward the tire normal rotation direction R side and outward in the tire widthwise direction, and further terminates in the shoulder land portion 18c.

Moreover, between first inner widthwise grooves 16i adjacent to each other in the tire circumferential direction U, a second inner widthwise groove 17i, which has the same shape as the first inner widthwise groove 16i, opens to the circumferential groove 14c, and reaches the tire equator line CL, is arranged.

The opening position of the second outer widthwise groove 26 to the circumferential groove 14c is a position shifted toward the tire normal rotation direction R side from the opening position of the second inner widthwise groove 17i to the circumferential groove 14c.

Moreover, in a belt layer B arranged on an inner side in a tire radial direction than a tread portion 10, a small crossing belt layer 13 composed of two small crossing belts 13A/13B as described above is arranged as a high angle belt. In addition, in tread surface view, that is, in plan view of the tread portion 10, an inflection point CP is arranged in a tire widthwise area S within 1/8, or more preferably a tire widthwise area within 1/16, of a tread width W1 from the high angle belt end HE as the widthwise center.

In addition, in the second embodiment, the maximum value of the angle θ formed by the tire widthwise direction W and the first inner widthwise groove 16i is set within the range of 20 to 80°. It is to be noted that Fig. 5 illustrates a state where the angle θ becomes largest at the inflection point CP.

Furthermore, in the second embodiment, the angle α formed by the first inner widthwise groove 16i and the tire widthwise direction W is within the range of 0 to 20° at the intersection position of the tire equator line and the first inner widthwise groove 16i. It is to be noted that Fig. 3 illustrates the first inner widthwise groove 16i in a manner such that α becomes approximately 0°.

Moreover, in the second embodiment, the distance L (see Fig. 3) between the first inner widthwise groove 16i and the second inner widthwise groove 17i adjacent to each other in the tire circumferential direction U, and the groove depth d (see Fig. 4) of the first inner widthwise groove 16i along the tire radial direction satisfy the following relational expression.

d/L> 1/10

When focusing on wear resistance property, it is to be noted that the width of the circumferential groove 14 in the tire widthwise direction W is preferably equal to or smaller than 10 mm with which the land portions support each other when force is applied.

On the other hand, when focusing on heat dissipation property, the width of the circumferential groove 14 in the tire widthwise direction W is preferably larger than 10 mm.

Furthermore, the construction vehicle tire 1 according to the second embodiment may be constructed in a manner such that the circumferential pitch of the first inner widthwise grooves 16i becomes equal to or larger than 50 mm.

(Function, Effect)

The following description will explain the functions and effects of the second embodiment.

In the construction vehicle tire 1 of the second embodiment, the first inner widthwise groove 16i configuring the widthwise groove 16 opens to the circumferential groove 14a and has an inflection point CP where the direction of a convex or concave with respect to the tire circumferential direction U changes toward the outer side in the tire widthwise direction.

In addition, an inner side of the first inner widthwise groove 16i in the tire widthwise direction than the inflection point CP extends with the angle θ against the tire widthwise direction W becoming smaller toward the tire equator line and reaches the tire equator line. Here, as the angle θ becomes larger, the shearing rigidity of the tire tread surface lowers, and therefore the wear resistance performance deteriorates especially during acceleration or deceleration and during turning. Since the angle θ is larger at a position closer to the inflection point CP, a great effect can be obtained in a viewpoint of maintaining the shearing rigidity of the entire tire while maximizing the braking force at a curved concave land part located on the tire normal rotation side of the bent groove portion 16it by making the angle θ large in the vicinity of the inflection point CP and small in the vicinity of the equator.

In addition, an outer side of the first inner widthwise groove 16i in the tire widthwise direction than the inflection point CP extends from the inflection point CP toward a side opposite to the tire normal rotation direction R side and outward in the tire widthwise direction, so that an inner land part LP2i having a curved convex shape toward a side opposite to the tire normal rotation direction R side, that is, a curved concave shape with respect to the tire normal rotation direction R is formed. In addition, in tread surface view, the inflection point CP is arranged in a tire widthwise area within 1/8 of the tread width W1 from the high angle belt end HE as the widthwise center.

In addition, the first outer widthwise groove 16e configuring the widthwise groove 16 extends toward the tire normal rotation direction R side and outward in the tire widthwise direction, so that the outer land part LP2e, which forms a land portion having a concave shape with respect to the tire normal rotation direction R together with an adjacent center land portion 18a on an inner side in the tire widthwise direction, is formed.

Therefore, when the tire is rotated in the tire normal rotation direction R during acceleration or the like, force in the tire normal rotation direction R, that is, driving force is generated at the tread rubber part in the vicinity of the high angle belt end HE where the rolling radius is large during tire normal rotation, while the tire rubber is caused to flow in a direction opposite to the tire normal rotation direction R by incompressibility of the tire rubber, and circumferential braking force is generated in a land part LP2 (land part composed of the inner land part LP2i and the outer land part LP2e) having a curved concave shape with respect to the tire normal rotation direction R. As a result, this functions as force to suppress the shearing force to be generated against the tread rubber part in the vicinity of the high angle belt end HE where the rolling radius is large during tire normal rotation, that is, to cancel the shearing force when the forces are equal. Accordingly, uneven wear caused by the shearing force due to the driving force and the braking force is suppressed, and therefore the construction vehicle tire with improved uneven wear resistance property can be obtained.

It is to be noted that Fig. 5 illustrates an example in which the position in the tire widthwise direction of the inflection point CP is arranged on a slightly outer side in the tire widthwise direction than the high angle belt end HE, and a remarkable effect in suppressing uneven wear at the 1/4 point is achieved.

Moreover, by forming the first inner widthwise groove 16i to have a curved shape as in the second embodiment, it becomes possible to incline only a site, which is desired to be inclined, of the first inner widthwise groove 16i with respect to the tire circumferential direction U, and it becomes easy to ensure the rigidity in the tire widthwise direction. Moreover, since the inclination of the first inner widthwise groove 16i can be made large in comparison with a case where the first inner widthwise groove 16i has a corner portion, the above-described circumferential breaking force can be made large effectively.

Moreover, since an area on an inner side in the tire widthwise direction than the inflection point CP extends with the angle $\theta$ against the tire widthwise direction W becoming smaller toward the tire equator line and reaches the tire equator line as described above, the first inner widthwise groove 16i is inclined with respect to the tire widthwise direction so that an inner position in the tire widthwise direction of an area from the tire equator line CL to the high angle belt end HE is grounded earlier during rotation in the tire normal rotation direction R. Therefore, the above-described circumferential braking force can be made large further effectively.

Moreover, the maximum value of the angle $\theta$ formed by the tire widthwise direction W and the first inner widthwise groove 16i is within the range of 20 to 80°. Therefore, the above-described circumferential braking force can be made large effectively.

Moreover, the second embodiment is constructed in a manner such that a length W2 of the widthwise groove 16 in the tire widthwise direction W becomes equal to or larger than 30% of a length W1 of the tread portion 10 in the tire widthwise direction W. Therefore, by effectively making the above-mentioned circumferential braking force large, it becomes possible to significantly improve the uneven wear resistance property.

Moreover, the angle $\alpha$ formed by the first inner widthwise groove 16i and the tire widthwise direction W is within the range of 0 to 20° at an intersection position of the tire equator line CL and the first inner widthwise groove 16i. This effectively prevents the block rigidity from being impaired.

Moreover, in the second embodiment, the angle $\varepsilon$ formed by the groove wall 16e2 and the tire widthwise direction W is within the range of $0° < \varepsilon \le 30°$ at the opening position of the first outer widthwise groove 16e and the circumferential groove 14c. It is therefore possible to further improve the uneven wear resistance property while effectively preventing the block rigidity from being impaired.

Although the second embodiment explains a case where the inflection point CP is arranged in a tire widthwise area within 1/8 of the tread width W1 in tread surface view from the high angle belt end HE as the widthwise center as an example in which the inflection point CP is arranged within a predetermined area in the tire widthwise direction, it is to be noted that the uneven wear resistance property at the tread rubber part can be improved according to a similar principle even when the inflection point CP is arranged in a tire widthwise area within 1/8, or more preferably 1/16, of the tread width W1 not from the high angle belt end HE but from a position in the tire widthwise direction where the rolling radius is large during tire normal rotation as the widthwise center. Furthermore, even a construction vehicle tire not having a high angle belt can achieve a similar effect, and a similar effect can also be achieved with not a construction vehicle tire but a heavy load tire.

This application claims priority based on Japanese Patent Application No. 2016-106225 filed on May 27, 2016.

Industrial Applicability

The heavy load tire according to the embodiments of the present invention improves uneven wear resistance property by suppressing shearing force to be generated between a tread rubber part where driving force is generated and a tread rubber part adjacent to the above-described tread rubber part where braking force is generated.

Reference Signs List

| | |
|---|---|
| 1 | CONSTRUCTION VEHICLE TIRE |
| 10 | TREAD PORTION |
| 13 | SMALL CROSSING BELT LAYER (HIGH ANGLE BELT) |
| 14 | CIRCUMFERENTIAL GROOVE |
| 14a | CIRCUMFERENTIAL GROOVE |
| 14b | CIRCUMFERENTIAL GROOVE |
| 14c | CIRCUMFERENTIAL GROOVE |
| 16 | WIDTHWISE GROOVE |
| 16e | FIRST OUTER WIDTHWISE GROOVE |
| 16i | FIRST INNER WIDTHWISE GROOVE |

16e1    GROOVE WALL
16e2    GROOVE WALL
17i     SECOND INNER WIDTHWISE GROOVE
26      SECOND OUTER WIDTHWISE GROOVE
B       BELT LAYER
CL      TIRE EQUATOR LINE
CP      INFLECTION POINT
HE      HIGH ANGLE BELT END
TE      TREAD END
R       TIRE NORMAL ROTATION DIRECTION
U       TIRE CIRCUMFERENTIAL DIRECTION
W       TIRE WIDTHWISE DIRECTION
W1      TREAD WIDTH
θ       ANGLE

**Claims**

1. A heavy load tire (1) comprising a tread portion (10), wherein
the tread portion (10) is partitioned into a plurality of portions by a widthwise groove (16) extending in a tire widthwise direction (W), and at least one of a circumferential groove (14) extending in a tire circumferential direction (U) and a tread end (TE) that is an end portion of the tread portion (10),
the circumferential groove (14) and the widthwise groove (16) are formed on at least one side of a tire equator line (CL),
the widthwise groove (16) is composed of a first inner widthwise groove (16i), which opens to the circumferential groove (14), extends inward in the tire widthwise direction (W), and reaches the tire equator line (CL), and a first outer widthwise groove (16e), which is wider than the first inner widthwise groove (16i), opens to the circumferential groove (14) at a position opposed to the first inner widthwise groove (16i), and extends outward in the tire widthwise direction (W), and are arrayed in the tire circumferential direction (U),
the first inner widthwise groove (16i) has an inflection point (CP) where a direction of a convex or a concave with respect to the tire circumferential direction (U) changes, extends from the inflection point (CP) to the tire equator line (CL) with an angle against the tire widthwise direction (W) becoming smaller toward the tire equator line (CL), and has a curved convex shape toward a tire normal rotation direction (R) side from the inflection point (CP) to the circumferential groove (14), and
a groove wall (16e1) forming the first outer widthwise groove (16e) on a side opposite to a tire normal rotation direction (R) extends outward in the tire widthwise direction (W) while being inclined toward a side opposite to the tire normal rotation direction (R),
wherein the first inner widthwise groove (16i) and the first outer widthwise groove (16e) are connected with each other so that groove wall positions on the tire normal rotation direction (R) side are aligned, wherein the angle δ formed by the tire widthwise direction (W) and the groove wall (16e1) of the first outer widthwise groove (16e) on a side opposite to the tire normal rotation direction (R) is within the range of 0° < δ ≤ 30° at the opening position of the first outer widthwise groove (16e) and the circumferential groove (14c), and
wherein a groove wall forming the first outer widthwise groove (16e) on the tire normal rotation direction (R) side, which is a groove wall opposed to the groove wall (16e1) on a side opposite to a tire normal rotation direction (R), extends outward in the tire widthwise direction (W) while being inclined toward a side opposite to the tire normal rotation direction (R) and extends along the tire widthwise direction (W) in the middle, so that the first outer widthwise groove (16e) extends with the groove width becoming larger toward the outer side in the tire widthwise direction (W) from the middle.

2. The heavy load tire (1) according to claim 1, wherein the inflection point (CP) is arranged within a predetermined area in the tire widthwise direction (W).

3. The heavy load tire (1) according to claim 2, wherein a high angle belt (13) is arranged in a belt layer arranged on an inner side in a tire radial direction than the tread portion (10), and
the inflection point (CP) is arranged in a tire widthwise area within 1/8 of a tread width from a high angle belt end (HE) as a widthwise center in tread surface view.

4. The heavy load tire (1) according to any one of claims 1 to 3, wherein a maximum value of an angle θ formed by the widthwise groove (16) and the tire widthwise direction (W) is within a range of 20 to 80°.

5. The heavy load tire (1) according to any one of claims 1 to 4, wherein a second outer widthwise groove (26), which is narrower than the first outer widthwise groove (16e), opens to the circumferential groove (14), and extends outward in the tire widthwise direction (W), is arranged between the first outer widthwise grooves (16e) adjacent to each other in the tire circumferential direction (U).

6. The heavy load tire (1) according to claim 5, wherein a second inner widthwise groove (17i), which has a same shape as the first inner widthwise groove (16i), opens to the circumferential groove (14), and reaches the tire equator line (CL), is arranged between the first inner widthwise grooves (16i) adjacent to each other in the tire circumferential direction (U), and
an opening position of the second outer widthwise groove (26) to the circumferential groove (14) is set to a position shifted in the tire circumferential direction (U) from an opening position of the second inner widthwise groove (17i) to the circumferential groove (14).

7. The heavy load tire (1) according to claim 5, wherein the second outer widthwise groove (26) linearly extends toward a side opposite to the tire normal rotation direction (R) side and outward in the tire widthwise direction.

**Patentansprüche**

1. Schwerlastreifen (1), der einen Laufflächenabschnitt (10) umfasst, wobei
der Laufflächenabschnitt (10) durch eine Breitenrichtungsrille (16), die sich in einer Reifenbreitenrichtung (W) erstreckt, und mindestens eines von einer umlaufenden Rille (14), die sich in einer Reifenumfangsrichtung (U) erstreckt, und einem Laufflächenende (TE), das ein Endabschnitt des Laufflächenabschnitts (10) ist, in mehrere Abschnitte unterteilt ist, die umlaufende Rille (14) und die Breitenrichtungsrille (16) auf mindestens einer Seite einer Reifenäquatorlinie (CL) geformt sind,
die Breitenrichtungsrille (16) aus einer ersten inneren Breitenrichtungsrille (16i) besteht, die sich zu der umlaufenden Rille (14) öffnet, sich in der Reifenbreitenrichtung (W) nach innen erstreckt und die Reifenäquatorlinie (CL) erreicht, und einer ersten äußeren Breitenrichtungsrille (16e), die breiter ist als die erste innere Breitenrichtungsrille (16i), sich an einer Position, entgegengesetzt zu der ersten inneren Breitenrichtungsrille (16i), zu der umlaufenden Rille (14) öffnet und sich in der Reifenbreitenrichtung (W) nach außen erstreckt, und die in der Reifenumfangsrichtung (U) gruppiert sind,
die erste innere Breitenrichtungsrille (16i) einen Wendepunkt (CP) aufweist, wo sich eine Richtung einer Außenwölbung oder einer Innenwölbung in Bezug auf die Reifenumfangsrichtung (U) ändert, sich von dem Wendepunkt (CP) zu der Reifenäquatorlinie (CL) mit einem Winkel gegenüber der Reifenbreitenrichtung (W) erstreckt, der hin zu der Reifenäquatorlinie (CL) kleiner wird, und eine gekrümmte konvexe Form hin zu einer Seite einer normalen Reifenrotationsrichtung (R) von dem Wendepunkt (CP) zu der umlaufenden Rille (14) aufweist, und
sich eine Rillenwand (16e1), welche die erste äußere Breitenrichtungsrille (16i) auf einer Seite, entgegengesetzt zu einer normalen Reifenrotationsrichtung (R), bildet, in der Reifenbreitenrichtung (W) nach außen erstreckt, während sie hin zu einer Seite, entgegengesetzt zu der normalen Reifenrotationsrichtung (R), geneigt ist,
wobei die erste innere Breitenrichtungsrille (16i) und die erste äußere Breitenrichtungsrille (16e) so miteinander verbunden sind, dass Rillenwandpositionen auf der Seite der normalen Reifenrotationsrichtung (R) ausgerichtet sind,
wobei der Winkel $\delta$, der durch die Reifenbreitenrichtung (W) und die Rillenwand (16e1) der ersten äußeren Breitenrichtungsrille (16e) auf einer Seite, entgegengesetzt zu der normalen Reifenrotationsrichtung (R), gebildet wird, an der Öffnungsposition der ersten äußeren Breitenrichtungsrille (16e) und der umlaufenden Rille (14) innerhalb des Bereichs von $0° < \delta \leq 30°$ liegt, und
wobei sich eine Rillenwand, welche die erste äußere Breitenrichtungsrille (16e) auf der Seite der normalen Reifenrotationsrichtung (R) bildet, die eine Rillenwand, entgegengesetzt zu der Rillenwand (16e1) auf einer Seite, entgegengesetzt zu einer normalen Reifenrotationsrichtung (R), ist, in der Reifenbreitenrichtung (W) nach außen erstreckt, während sie hin zu einer Seite, entgegengesetzt zu der normalen Reifenrotationsrichtung (R), geneigt ist, und sich in der Mitte entlang der Reifenbreitenrichtung (W) erstreckt, so dass sich die erste äußere Breitenrichtungsrille (16e) mit der Rillenbreite erstreckt, die von der Mitte hin zu der in der Reifenbreitenrichtung (W) äußeren Seite größer wird.

2. Schwerlastreifen (1) nach Anspruch 1, wobei der Wendepunkt (CP) innerhalb eines vorbestimmten Bereichs in der Reifenbreitenrichtung (W) angeordnet ist.

3. Schwerlastreifen (1) nach Anspruch 2, wobei
ein Hochwinkelgürtel (13) in einer Gürtellage angeordnet ist, die auf einer inneren Seite, in einer Reifenradialrichtung weiter innen als der Laufflächenabschnitt (10), angeordnet ist, und
der Wendepunkt (CP) in einem Reifenbreitenbereich innerhalb von 1/8 einer Laufflächenbreite von einem Hochwinkelgürtelende (HE) als einer Mitte der Breite in einer Laufflächenansicht angeordnet ist.

4. Schwerlastreifen (1) nach einem der Ansprüche 1 bis 3, wobei ein maximaler Wert eines Winkels $\theta$, der durch die Breitenrichtungsrille (16) und die Reifenbreitenrichtung (W) gebildet wird, innerhalb eines Bereichs von 20 bis 80° liegt.

5. Schwerlastreifen (1) nach einem der Ansprüche 1 bis 4, wobei eine zweite äußere Breitenrichtungsrille (26), die schmaler ist als die erste äußere Breitenrichtungsrille (16a), sich zu der umlaufenden Rille (14) öffnet und sich in der Reifenbreitenrichtung (W) nach außen erstreckt, zwischen den ersten äußeren Breitenrichtungsrillen (16e) angeordnet ist, die einander in der Reifenumfangsrichtung (U) benachbart sind.

6. Schwerlastreifen (1) nach Anspruch 5, wobei

eine zweite innere Breitenrichtungsrille (17i), die eine gleiche Form aufweist wie die erste innere Breitenrichtungsrille (16i), sich zu der umlaufenden Rille (14) öffnet und die Reifenäquatorlinie (CL) erreicht, zwischen den ersten inneren Breitenrichtungsrillen (16i) angeordnet ist, die einander in der Reifenumfangsrichtung (U) benachbart sind, und

eine Öffnungsposition der zweiten äußeren Breitenrichtungsrille (26) zu der umlaufenden Rille (14) auf eine Position festgesetzt ist, die in der Reifenumfangsrichtung (U) von einer Öffnungsposition der zweiten inneren Breitenrichtungsrille (17i) zu der umlaufenden Rille (14) versetzt ist.

7. Schwerlastreifen (1) nach Anspruch 5, wobei sich die zweite äußere Breitenrichtungsrille (26) linear hin zu einer Seite, entgegengesetzt zu der Seite der normalen Reifenrotationsrichtung (R), und in der Reifenbreitenrichtung nach außen erstreckt.

**Revendications**

1. Bandage pneumatique pour poids-lourds (1), comprenant une partie de bande de roulement (10), dans lequel :

la partie de bande de roulement (10) est divisée en plusieurs parties par une rainure dans le sens de la largeur (16) s'étendant dans une direction de la largeur du bandage pneumatique (W), et au moins un parmi une rainure circonférentielle (14) s'étendant dans une direction circonférentielle du bandage pneumatique (U) ou une extrémité de la bande de roulement (TE) constituant une partie d'extrémité de la partie de bande de roulement (10) ;

la rainure circonférentielle (14) et la rainure dans le sens de la largeur (16) sont formées sur au moins un côté d'une ligne équatoriale du bandage pneumatique (CL) ;

la rainure dans le sens de la largeur (16) est composée d'une première rainure interne dans le sens de la largeur (16i), ouverte vers la rainure circonférentielle (14), s'étend vers l'intérieur dans la direction de la largeur du bandage pneumatique (W), et atteint la ligne équatoriale du bandage pneumatique (CL), et d'une première rainure externe dans le sens de la largeur (16e), plus large que la première rainure interne dans le sens de la largeur (16i), ouverte vers la rainure circonférentielle (14) au niveau d'une position opposée à la première rainure interne dans le sens de la largeur (16i) et s'étendant vers l'extérieur dans la direction de la largeur du bandage pneumatique (W), agencées dans la direction circonférentielle du bandage pneumatique (U) ;

la première rainure interne dans le sens de la largeur (16i) comporte un point d'inflexion (CP) où une direction d'une ligne convexe ou d'une ligne concave par rapport à la direction circonférentielle du bandage pneumatique (U) change, s'étend du point d'inflexion (CP) vers la ligne équatoriale du bandage pneumatique (CL) avec un angle par rapport à la direction de la largeur du bandage pneumatique (W) étant réduit vers la ligne équatoriale du bandage pneumatique (CL), et a une forme convexe courbée vers un côté de la direction de rotation normale du bandage pneumatique (R), du point d'inflexion (CP) vers la rainure circonférentielle (14) ; et

une paroi de rainure (16e1), formant la première rainure externe dans le sens de la largeur (16e) sur un côté opposé à la direction de rotation normale du bandage pneumatique (R) s'étend vers l'extérieur dans la direction de la largeur du bandage pneumatique (W) tout en étant inclinée vers un côté opposé à la direction de rotation normale du bandage pneumatique (R) ;

dans lequel la première rainure interne dans le sens de la largeur (16i) et la première rainure externe dans le sens de la largeur (16e) sont connectées l'une à l'autre, de sorte que des positions de parois de rainure sur le côté de la direction de rotation normale du bandage pneumatique (R) sont alignées ;

dans lequel l'angle δ formé par la direction de la largeur du bandage pneumatique (W) et la paroi de rainure (16e1) de la première rainure externe dans le sens de la largeur (16e) sur un côté opposé à la direction de rotation normale du bandage pneumatique (R) est compris dans un intervalle de $0° < \delta \leq 30°$ au niveau de la position d'ouverture de la première rainure externe dans le sens de la largeur (16e) et de la rainure circonférentielle (14c) ; et

dans lequel une paroi de rainure formant la première rainure externe dans le sens de la largeur (16e) sur le côté de la direction de rotation normale du bandage pneumatique (R), constituant une paroi de rainure opposée à la paroi de rainure (16e1) sur un côté opposé à une direction de rotation normale du bandage pneumatique (R), s'étend vers l'extérieur dans la direction de la largeur du bandage pneumatique (W), tout en étant inclinée vers un côté opposé à la direction de rotation normale du bandage pneumatique (R) et s'étend le long de la direction de la largeur du bandage pneumatique (W) au milieu de sorte que la première rainure externe dans le sens de la largeur (16e) s'étend au fur et à mesure que la largeur de rainure augmente à partir du milieu vers le côté externe dans la direction de la largeur du bandage pneumatique (W).

**2.** Bandage pneumatique pour poids-lourds (1) selon la revendication 1, dans lequel le point d'inflexion (CP) est situé dans le cadre d'une zone prédéterminée, dans la direction de la largeur du bandage pneumatique (W).

**3.** Bandage pneumatique pour poids-lourds (1) selon la revendication 2, dans lequel :

une ceinture à angle élevé (13) est agencée dans une couche de ceinture agencée sur un côté plus interne, dans une direction radiale du bandage pneumatique, que la partie de bande de roulement (10) ; et

le point d'inflexion (CP) est situé dans une zone de la largeur du bandage pneumatique, à une distance de 1/8 d'une largeur de la bande de roulement, à partir d'une extrémité de la ceinture à angle élevé (HE), constituant un centre dans le sens de la largeur dans la vue de la surface de la bande de roulement.

**4.** Bandage pneumatique pour poids-lourds (1) selon l'une quelconque des revendications 1 à 3, dans lequel une valeur maximale d'un angle 9 formé par la rainure dans le sens de la largeur (16) et la direction de la largeur du bandage pneumatique (W) est compris dans un intervalle allant de 20 à 80°.

**5.** Bandage pneumatique pour poids-lourds (1) selon l'une quelconque des revendications 1 à 4, dans lequel une deuxième rainure externe dans le sens de la largeur (26), plus étroite que la première rainure externe dans le sens de la largeur (16e), ouverte vers la rainure circonférentielle (14) et s'étendant vers l'extérieur dans la direction de la largeur du bandage pneumatique (W), est agencée entre les premières rainures externes dans le sens de la largeur (16e) adjacentes l'une à l'autre dans la direction circonférentielle du bandage pneumatique (U).

**6.** Bandage pneumatique pour poids-lourds (1) selon la revendication 5, dans lequel :

une deuxième rainure interne dans le sens de la largeur (17i), ayant la même forme que la première rainure interne dans le sens de la largeur (16i), ouverte vers la rainure circonférentielle (14) et atteignant la ligne équatoriale du bandage pneumatique (CL), est agencée entre les premières rainures internes dans le sens de la largeur (16i) adjacentes l'une à l'autre dans la direction circonférentielle du bandage pneumatique (U) ; et

une position d'ouverture de la deuxième rainure externe dans le sens de la largeur (26) vers la rainure circonférentielle (14) est ajustée vers une position décalée dans la direction circonférentielle du bandage pneumatique (U), d'une position d'ouverture de la deuxième rainure interne dans le sens de la largeur (17i) vers la rainure circonférentielle (14).

**7.** Bandage pneumatique pour poids-lourds selon la revendication 5, dans lequel :
la deuxième rainure externe dans le sens de la largeur (26) s'étend de manière linéaire vers un côté opposé au côté de la direction de rotation normale du bandage pneumatique (R) et vers l'extérieur, dans la direction de la largeur du bandage pneumatique.

FIG. 1

EP 3 466 724 B1

# FIG. 2

FIG. 3

EP 3 466 724 B1

# FIG. 4

# FIG. 5

**EP 3 466 724 B1**

**REFERENCES CITED IN THE DESCRIPTION**

**Patent documents cited in the description**

- JP 2012183885 A
- JP 63222907 A
- JP 7117414 A
- JP 2017019365 A
- JP 2013220713 A
- EP 3321105 A1
- WO 2013157544 A
- JP 2016106225 A